# FASCICULE DE BREVET EUROPEEN

(11) **EP 1 601 252 B1**
(45) Date de publication et mention de la délivrance du brevet: **02.07.2008**
(21) Numéro de dépôt: 04707546.0
(22) Date de dépôt: 03.02.2004
(51) Int. Cl.: A23B 4/023, A23B 4/03

(54) **PROCEDE DE PREPARATION POUR CONSERVATION DE PRODUITS ALIMENTAIRES CRUS ISSUS DE LA PECHE**
VERFAHREN ZUR HERSTELLUNG UND KONSERVIERUNG VON FRISCHEN FISCHPRODUKTE
PREPARATION METHOD FOR PRESERVING COOKED FISH-BASED FOOD PRODUCTS

(30) Priorité: 03.02.2003 FR 0301207
(43) Date de publication de la demande: 07.12.2005
(73) Titulaire: Tachet, Jean-Marc, 38110 Dolomieu (FR)
(72) Inventeur: Tachet, Jean-Marc, 38110 Dolomieu (FR)
(74) Mandataire: Guerre, Dominique
(86) Numéro de dépôt international: PCT/FR2004/000248
(87) Numéro de publication internationale: WO 2004/068955

(56) Documents cités:
- EP-A- 0 587 515
- FR-A- 2 656 770
- FR-A- 2 664 794
- FR-A- 2 762 191
- US-A- 4 552 766
- LEE E. ; OHSHIMA T.: "Preparation and keeping quality of vacuum-packed and seasoned-dried filefish products" JOURNAL OF JAPANESE SOCIETY OF FOOD SCIENCE AND TECHNOLOGY, vol. 29, no. 7, 1982, pages 393-399, XP008021679

## Description

La présente invention concerne un procédé de préparation pour conservation de produits alimentaires crus issus de la pêche.

Dans le domaine de la préparation pour conservation des produits alimentaires, et en particulier des produits issus de la pêche comme les poissons de mer ou d'eau douce, les crustacés, les coquillages, et autres espèces comestibles issues de la pêche, de nombreuses techniques sont connues "p.e. LEE 1982 vol. 29 n°7 pages 393-399: J. of Jap. Soc. of food Sc. & Techn.".

En effet, il n'est pas rare de devoir préparer certains produits, avant de les conditionner, pour une conservation de plusieurs jours, jusqu'au moment où lesdits produits seront cuisinés, par exemple par cuisson, avant leur dégustation.

Ainsi, on connaît la technique consistant à fumer les produits pêchés, par exemple les poissons comme le saumon, la truite, le flétan. Une telle technique permet une durée de conservation relativement longue. Néanmoins, elle dénature particulièrement les propriétés organoleptiques initiales du produit ainsi préparé: la saveur propre du produit a tendance à disparaître au profit de la saveur forte due au fumage. En outre, il est difficilement possible de cuire des produits ainsi fumés, qui se dégustent généralement crus.

Une autre technique connue de préparation pour conservation, est le salage. Cette technique est appliquée couramment pour des poissons de mer tels que la morue. La technique du salage, connue depuis très longtemps, permet d'obtenir une durée de conservation longue Néanmoins, cette technique, nécessite un déssalage avant cuisson.

Enfin, il est connu d'utiliser des marinades, mélanges habituellement liquides qui permettent une conservation du produit pendant une durée de 8 à 15 jours, parfois 3 semaines. Néanmoins, cette technique présente le désavantage de modifier la texture du produit, après contact prolongé des chairs avec le liquide.

Il est à noter que la plupart des techniques citées ci-dessus et actuellement utilisées industriellement, font intervenir dans la composition utilisée pour la préparation des produits, un ou plusieurs additifs ou conservateurs de nature chimique - E 200 à E 297 - ou anti-oxydants - BHA (butylhydroxy-anisol) (E320) ou BHT (butylhydroxy-toluène) (E321) par exemple -, ou encore des agents de texture - E 322 à E 495 -. Une telle pratique, bien que souvent nécessaire à la bonne réalisation de ces procédés, est mal perçue par le consommateur, qui préfère des aliments exempts d'additifs.

La présente invention se propose donc de résoudre les problèmes cités ci-dessus, en fournissant un procédé de préparation pour conservation de produits crus issus de la pêche, qui dénature le moins possible les propriétés organoleptiques (saveur, texture) du ou des produit(s), à l'aide d'un mélange ne comprenant aucun conservateur ou additif de nature chimique, de sorte que la durée limite de consommation soit garantie pour au moins 14 jours, procédé qui, en outre, permette d'obtenir des produits prêts à cuisiner, par exemple prêts à cuire.

L'objectif cité ci-dessus est atteint avec un procédé de préparation pour conservation de produits alimentaires crus issus de la pêche, caractérisé en ce qu'il comprend, dans l'ordre, les étapes constistant à:
(i) fileter les produits, les laver, puis les piquer, et
(ii) saler les filets obtenus à l'aide d'un mélange sec de marinade comprenant du sel sec, du poivre, du sucre, et au moins un alcool vaporisé et/ou au moins une huile aromatique vaporisée, et
(iii) laisser mariner les produits au contact de ladite marinade sèche, en chambre froide de saumurage à une température contrôlée, pendant une durée comprise entre 5 minutes et 48 heures, et
(iv) rincer les produits, et
(v) sécher les produits en salle de séchage pendant une durée comprise entre 1 et 36 heures, et enfin
(vi) conditionner les produits.

Par "produits de la pêche", on entend, tout poisson de mer ou d'eau douce, les crustacés, les mollusques et coquillages, et toutes espèces aquatiques ou semi-aquatiques, destinés à la consommation sous forme crue, ou cuite.

Par "prêt à cuisiner", on entend des produits qui ont été préparés par le procédé décrit ci-dessus, et qui à réception par le consommateur, peuvent être directement sortis de leur conditionnement, et préparés pour dégustation (c'est-à-dire présentés pour dégustation tels quels, ou bien cuits sans avoir à être lavés, rincés, séchés, ou encore déssalés).

De préférence, la durée de marinage en chambre froide est comprise entre 20 minutes et 36 heures, et la durée de séchage est comprise entre 12 et 24 heures. Cette dernière étape est de préférence réalisée sur grille. Ces durées sont respectivement déterminées par le poids de produit à préparer.

De préférence, la température de marinage en chambre froide, est comprise entre -2 et +6°C, de préférence entre 0 et +2°C.

L'alcool vaporisé sera choisi en accord avec la saveur du produit à préparer. On pourra notamment utiliser du Pernod® pour des poissons de mer, comme le rouget.

Le fait d'utiliser un alcool vaporisé, permet de conserver une marinade sèche, ce qui évite des altérations de la texture du produit dues à un contact prolongé avec un liquide. De plus l'alcool vaporisé permet de réduire encore la flore bactérienne qui pourrait se développer pendant la conservation du produit, et augmente ainsi cette durée de conservation. L'huile aromatique vaporisée sera utilisée, pour les raisons évoquées ci-dessus pour l'alcool.

Eventuellement, on pourra choisir de réaliser l'étape de séchage sous forme d'une fumaison, en fonction de la nature du produit à conserver.

Selon une forme d'exécution possible de l'invention, le conditionnement des produits est réalisé dans des barquettes operculées, sous vide d'air.

Selon une forme alternative d'exécution de la présente invention, le conditionnement des produits est réalisé dans des barquettes operculées, sous atmosphère modifiée par apport de gaz neutre. Le gaz neutre pourra être par exemple de l'azote.

La présente invention fournit également un produit cru issu de la pêche et prêt à cuisiner, obtenu selon le procédé décrit ci-dessus.

De toute façon, l'invention sera bien comprise à l'aide de la description détaillée qui suit d'une forme d'exécution d'un procédé de préparation selon l'invention.

Le procédé selon l'invention consiste en la préparation en vue de leur conservation, de produits alimentaires crus issus de la pêche.

Dans l'exemple présent, le produit est un rouget, que l'on prépare, sous forme de filets, à la conservation à l'aide d'une marinade sèche au Pernod®.

Ce procédé comprend, dans l'ordre, les étapes consistant à:
(i) fileter le rouget, le laver, puis le piquer, puis
(ii) saler les filets obtenus à l'aide d'un mélange sec de marinade comprenant du sel sec, du poivre, et du sucre, du Pernod®, puis
(iii) laisser mariner les filets de rouget au contact de la marinade sèche, en chambre froide de saumurage à une température contrôlée comprise entre 0 et 2°C, pendant une durée comprise entre 5 minutes et 48 heures, puis
(iv) rincer les filets, puis
(v) sécher les filets sur grille en salle de séchage pendant une durée comprise entre 1 et 36 heures, et enfin
(vi) conditionner les filets de rouget en barquettes operculées, sous atmosphère contrôlée par apport d'azote.

Le produit obtenu, des filets de rouget marinés au Pernod, sont prêts à cuire. Ils ont une durée limite de consommation (DLC) de 14 jours au minimum.

En outre, on a découvert de manière surprenante que le procédé selon l'invention permet de conserver les qualités organoleptiques du produit, c'est-à-dire la saveur propre de poisson, ainsi que la texture de sa chair, et également de stabiliser efficacement le développement des flores totales. Ainsi, une analyse microbiologique du produit après 14 jours de conservation, indique une qualité du produit similaire à la qualité lors du conditionnement, en particulier sans développement d'agents bactériens.

Ce procédé efficace de conservation est obtenu sans l'aide de conservateurs chimiques, ou d'agents de texture, et aucun exudat indésirable n'est produit pendant la durée de la conservation.

Comme il va de soi, l'invention ne se limite pas à la seule forme d'exécution de ce procédé, décrite ci-dessus à titre d'exemple, elle en embrasse au contraire toutes les variantes. C'est ainsi notamment que l'on peut envisager d'ajouter des épices, ou de faire varier la nature des alcools, ou des huiles ajoutés, en accord avec la saveur et la texture des produits préparés.

## Revendications

1. - Procédé de préparation pour conservation de produits alimentaires crus issus de la pêche, **caractérisé en ce qu'**il comprend, dans l'ordre, les étapes consistant à:
(i) fileter les produits, les laver, puis les piquer, et
(ii) saler les filets obtenus à l'aide d'un mélange sec de marinade comprenant du sel sec, du poivre, et du sucre, et au moins un alcool vaporisé et/ou au moins une huile aromatique vaporisée, et
(iii) laisser mariner les produits au contact de ladite marinade sèche, en chambre froide de saumurage à une température contrôlée, pendant une durée comprise entre 5 minutes et 48 heures, et
(iv) rincer les produits, et
(v) sécher les produits en salle de séchage pendant une durée comprise entre 1 heure et 36 heures, et enfin
(vi) conditionner les produits.

2. - Procédé selon la revendication 1, **caractérisé en ce que** le séchage des produits sur grille est réalisé sous forme d'une fumaison.

3. - Procédé selon l'une quelconque des revendications 1 ou 2, **caractérisé en ce que** le conditionnement des produits est réalisé dans des barquettes operculées, sous vide d'air.

4. - Procédé selon l'une quelconque des revendications 1 à 3, **caractérisé en ce que** le conditionnement des produits est réalisé dans des barquettes operculées, sous atmosphère modifiée par apport de gaz neutre.

5. - Procédé selon l'une quelconque des revendications 1 à 4, **caractérisé en ce que** la durée de marinage en chambre froide est comprise entre 20 minutes et 36 heures, et la durée de séchage est comprise entre 12 et 24 heures.

6. - Procédé selon l'une quelconque des revendications 1 à 5, **caractérisé en ce que** la température de marinage en chambre froide, est comprise entre -2 et +6°C, de préférence entre 0 et +2°C.

7. - Produit cru issu de la pêche, prêt à cuisiner, **caractérisé en ce qu'**il est obtenu par un procédé selon l'une quelconque des revendications 1 à 6.

## Claims

1. Method of preparation for preserving raw food products from fishing, **characterized in that** it comprises, in the following order, the steps consisting in:
(i) filleting the products, washing them, then pricking them, and
(ii) salting the fillets obtained using a dry mixture of marinade comprising dry salt, pepper, and sugar, and at least one vaporized alcohol and/or at least one vaporized aromatic oil, and
(iii)leaving the products to marinate in contact with said dry marinade, in a pickling cold room at a controlled temperature, for a period of between 5 minutes and 48 hours, and
(iv) rinsing the products, and
(v) drying the products in a drying room for a period of between 1 hour and 36 hours, and finally
(vi) packaging the products.

2. Method according to Claim 1, **characterized in that** the products are dried on a grille in the form of a smoke-cured product.

3. Method according to either of Claims 1 and 2, **characterized in that** the products are packaged in lidded containers, under air vacuum.

4. Method according to any one of Claims 1 to 3, **characterized in that** the products are packaged in lidded containers, under atmosphere modified by the addition of inert gas.

5. Method according to any one of Claims 1 to 4, **characterized in that** the marinating time in the cold room is between 20 minutes and 36 hours, and the drying time is between 12 and 24 hours.

6. Method according to any one of Claims 1 to 5, **characterized in that** the marinating temperature in the cold room is between -2 and +6°C, and preferably between 0 and +2°C.

7. Raw product from fishing, ready for preparation, **characterized in that** it is obtained by a method according to any one of Claims 1 to 6.

## Patentansprüche

1. Vorbereitungsverfahren zum Konservieren roher Nahrungsmittelprodukte aus der Fischerei, **dadurch gekennzeichnet, dass** es in der folgenden Reihenfolge die folgenden Schritte aufweist:
(i) Filettieren der Produkte, Waschen dann Anstechen und
(ii) Salzen der erzielten Filets mit Hilfe eines Marinadetrockengemischs, das trockenes Salz, Pfeffer, Zucker und mindestens einen verdampften Alkohol und/oder mindestens ein verdampftes aromatisches Öl enthält, und
(iii) Marinierenlassen der Produkte in Berührung mit der Trockenmarinade in einem Pökelkühlraum bei einer kontrollierten Temperatur während einer Dauer zwischen 5 Minuten und 48 Stunden und
(iv) Spülen der Produkte und
(v) Trocknen der Produkte im Trockenraum während einer Dauer zwischen 1 und 36 Stunden und schließlich
(vi) Abpacken der Produkte.

2. Verfahren nach Anspruch 1, **dadurch gekennzeichnet, dass** das Trocknen der Produkte auf Gitter in Form eines Räucherns erfolgt.

3. Verfahren nach einem der Ansprüche 1 oder 2, **dadurch gekennzeichnet, dass** das Konditionieren der Produkte in Schalen mit Abziehdeckel unter Vakuum erfolgt.

4. Verfahren nach einem der Ansprüche 1 bis 3, **dadurch gekennzeichnet, dass** das Konditionieren der Produkte in Schalen mit Abziehdeckel unter durch Zufuhr neutralen Gases modifizierter Atmosphäre erfolgt.

5. Verfahren nach einem der Ansprüche 1 bis 4, **dadurch gekennzeichnet, dass** die Dauer des Marinierens in dem Kühlraum zwischen 20 Minuten und 36 Stunden liegt und die Dauer des Trocknens zwischen 12 und 24 Stunden liegt.

6. Verfahren nach einem der Ansprüche 1 bis 5, **dadurch gekennzeichnet, dass** die Mariniertemperatur im Kühlraum zwischen -2 und +6 °C, vorzugsweise zwischen 0 und +2 °C liegt.

7. Rohes Produkt aus der Fischerei, zum Garen bereit, **dadurch gekennzeichnet, dass** es gemäß einem Verfahren nach einem der Ansprüche 1 bis 6 erzielt wird.
